# EUROPÄISCHE PATENTSCHRIFT

(11) **EP 4 238 896 B1**
(45) Veröffentlichungstag und Bekanntmachung des Hinweises auf die Patenterteilung: **30.04.2025**
(21) Anmeldenummer: 22159995.4
(22) Anmeldetag: 03.03.2022
(51) Int. Cl.: B65G 1/04, B65G 57/30, F16B 7/04, E04B 1/24

(54) **STAPELLAGERANORDNUNG**
STACK STORAGE ASSEMBLY
SYSTÈME DE STOCKAGE EMPILÉ

(43) Veröffentlichungstag der Anmeldung: 06.09.2023
(73) Patentinhaber: Jungheinrich Aktiengesellschaft, 22047 Hamburg (DE)
(72) Erfinder: Becker, Michael, 63512 Hainburg (DE); Alberg, M. Eng. (FH) Anatolij, 64319 Pfungstadt (DE); Gerhardt, Marc, 36088 Hünfeld (DE)
(74) Vertreter: Keil & Schaafhausen Patentanwälte PartGmbB

(56) Entgegenhaltungen:
- EP-A1- 3 782 928
- GB-A- 2 456 877
- US-A1- 2009 000 235

## Beschreibung

Die Erfindung betrifft eine Stapellageranordnung mit mindestens einem Behälteraufnahmeraum und einem Beschickungsraum, der unterhalb des Behälteraufnahmeraums angeordnet ist, einer Rahmenanordnung zwischen dem Behälteraufnahmeraum und dem Beschickungsraum und einem Ständer an mindestens einer Ecke des Beschickungsraums, der mit der Rahmenanordnung durch mindestens eine Verbindungseinrichtung verbunden ist.

Eine derartige Stapellageranordnung ist beispielsweise aus EP 3 782 930 A1 bekannt. Eine derartige Stapellageranordnung dient dazu, eine große Anzahl von Behältern aufzunehmen. Die Behälter werden dabei gestapelt. Jeder Stapel ist dann in einem Behälteraufnahmeraum angeordnet.

Eine ähnliche Stapellageranordnung, welche die Merkmale des Oberbegriffs des Anspruchs 1 aufweist, ist aus EP 3 782 928 A1 bekannt.

Die Einlagerung eines Behälters in den Behälteraufnahmeraum und die Entnahme eines Behälters aus dem Behälteraufnahmeraum erfolgt bei der vorliegenden Erfindung von unten durch den Beschickungsraum. Bei dem Einlagern eines Behälters wird ein Behälter mit Hilfe eines Beschickungsfahrzeugs durch den Beschickungsraum in eine Position verbracht, die sich unterhalb des Behälteraufnahmeraums befindet. Der Behälter wird dann angehoben, bis er in den Behälteraufnahmeraum eintritt. Wenn im Behälteraufnahmeraum bereits ein Behälter (oder ein Stapel von Behältern) angeordnet ist, dann wird beim Anheben des Behälters der bereits im Behälteraufnahmeraum befindliche Behälter oder Behälterstapel mit angehoben, so dass sich darin ein Stapel von zwei oder mehr Behältern befindet. Dieser Stapel wird dann auf einer Halteanordnung abgelegt, die vielfach an der Rahmenanordnung angeordnet ist.

Um eine seitliche Stabilität des Stapels von Behältern sicherzustellen, ist an mindestens einer Ecke des Behälteraufnahmeraums ein Ständer angeordnet. Vielfach befindet sich ein derartiger Ständer an jeder Ecke oder an diagonal gegenüberliegenden Ecken des Behälteraufnahmeraums. Der Ständer muss vertikal ausgerichtet sein. Er kann beispielsweise auf der Rahmenanordnung aufstehen. Vielfach sind benachbarte Ständer mit einer gewissen Entfernung von der Rahmenanordnung noch durch zusätzliche Querstreben miteinander verbunden.

GB 2 456 877 A zeigt ein Befestigungssystem, bei dem zwei senkrecht zueinander angeordnete Profile durch eine Verbindungseinrichtung verbunden werden können, die zwei Elemente aufweist, die mit den beiden Profilen jeweils klemmend verbunden werden können und einen Winkel zwischen den beiden Profilen überbrückt.

US 2009/0000235 A1 zeigt eine Ausgestaltung, bei der zwei senkrecht zueinander angeordnete Profile durch ein Winkelelement miteinander verbunden werden können, wobei das Winkelelement ein abgeschrägtes Mitteilteil aufweist.

Der Erfindung liegt die Aufgabe zugrunde, auf einfache Weise eine stabile Ausrichtung des Ständers zur Rahmenanordnung zu ermöglichen.

Diese Aufgabe wird bei einer Stapellageranordnung der eingangs genannten Art dadurch gelöst, dass die Verbindungseinrichtung einen Winkel zwischen der Rahmenanordnung und dem Ständer überbrückt und klemmend an der Rahmenanordnung anliegt, wobei die Rahmenanordnung mindestens zwei Rahmenelemente mit unterschiedlichen Dicken aufweist, wobei die Verbindungseinrichtung mindestens zwei auf die unterschiedlichen Dicken abgestimmte unterschiedliche Klemmbereiche aufweist.

Mit einer derartigen Verbindungseinrichtung wird im Bereich zwischen Ständer und Rahmenanordnung ein Dreieck erzeugt, das praktisch nicht verformt werden kann. Die Montage der Verbindungseinrichtung ist relativ einfach. Die Verbindungseinrichtung wird an der Rahmenanordnung verklemmt, d.h. man muss nicht Fügeelemente durch Bohrungen in der Verbindungseinrichtung und der Rahmenanordnung hindurchführen. Dies vereinfacht die Montage der Verbindungseinrichtung ganz erheblich. Auch die Herstellung der Rahmenanordnung und ihrer Teile wird stark vereinfacht. Sie können beispielsweise durch Gießen hergestellt werden. Eine aufwändige Nachbearbeitung ist nicht erforderlich. Die Ständer können auf einfache Weise zuverlässig mit dem Rahmen verbunden werden. Erfindungsgemäß umfasst die Rahmenanordnung mindestens zwei Träger mit unterschiedlichen Dicken, wobei die Verbindungseinrichtung mindestens zwei auf die unterschiedlichen Dicken abgestimmte unterschiedliche Klemmbereiche aufweist.

Vielfach sind die in dem Behälteraufnahmeraum aufzunehmenden Behälter mit einem rechteckigen Grundriss ausgestattet. Dementsprechend ist es zweckmäßig, den Behälteraufnahmeraum ebenfalls mit einem rechteckigen horizontalen Querschnitt auszubilden. Die Rahmenanordnung weist dann erste Rahmenelemente an der Längsseite und zweite Rahmenelemente an der Querseite des rechteckigen Grundrisses auf. Man kann dann die zweiten Rahmenelemente an der Querseite, die eine kürzere Länge aufweisen, mit einer etwas größeren Dicke ausbilden als die ersten Rahmenelemente an der Längsseite. Wenn die Verbindungseinrichtung dann zwei auf die unterschiedlichen Dicken abgestimmte unterschiedliche Klemmbereiche aufweist, kann man die gleiche Art von Verbindungseinrichtungen sowohl für die Verbindung des Ständers mit den ersten Rahmenelementen als auch für die Verbindung des Ständers mit den zweiten Rahmenelementen verwenden. Man benötigt also nur eine einzige Art von Verbindungseinrichtungen. Auch dies spart Kosten.

Vorzugsweise weist die Rahmenanordnung für jede Verbindungseinrichtung eine Ausnehmung auf, in die die Verbindungseinrichtung eingreift. Eine derartige Ausnehmung kann bereits beim Herstellen der Rahmenanordnung mit ausgebildet werden. Die Ausnehmung ermöglicht zusätzlich zu der klemmenden

Verbindung auch noch einen gewissen Formschluss zwischen der Verbindungseinrichtung und der Rahmenanordnung. Dementsprechend kann die Klemmkraft, die für die klemmende Verbindung erforderlich ist, relativ kleingehalten werden.

Vorzugsweise umgreift die Verbindungseinrichtung einen Teil der Rahmenanordnung U-förmig. Die Verbindungseinrichtung kann beispielsweise auf einer Oberseite der Rahmenanordnung anliegen und gleichzeitig in die Ausnehmung eingreifen.

Vorzugsweise weist die Rahmenanordnung Träger auf. Die Ausnehmung ist als Durchgangsöffnung in einem Träger ausgebildet, der mit einem Winkelelement verbunden ist, und ein den Träger mit dem Winkelelement verbindendes Fügeelement ist durch die Durchgangsöffnung zugänglich. Die als Durchgangsöffnung ausgebildete Ausnehmung kann dann gleichzeitig verwendet werden, um Fügeelemente zu montieren, die den Träger mit dem Winkelelement verbinden.

Vorzugsweise weist die Verbindungseinrichtung zwei Verbindungselemente auf, die von entgegengesetzten Seiten an einem Bereich der Rahmenanordnung anliegen. Die Verwendung von zwei Verbindungselementen erleichtert die Montage. Man muss die beiden Verbindungselemente lediglich auf beiden Seiten der Rahmenanordnung anordnen und dann gegeneinander verspannen.

Vorzugsweise sind die Verbindungselemente durch mindestens einen Gewindebolzen gegen die Rahmenanordnung verspannt. Ein Gewindebolzen ist ein bekanntes Fügeelement, das leicht zum Spannen der Verbindungselemente gegen die Rahmenanordnung verwendet werden kann. Es ist hierzu lediglich erforderlich, in den beiden Verbindungselementen fluchtende Bohrungen einzubringen, durch die der Gewindebolzen geführt werden kann. Weitere Bearbeitungen sind vielfach nicht erforderlich.

Vorzugsweise weist der Ständer eine Schienenanordnung auf, in die die Verbindungseinrichtung eingreift. Die Schienenanordnung ermöglicht eine gewisse Beweglichkeit der Verbindungseinrichtung entlang des Ständers, so dass man auf einfache Weise eine Justierung der Verbindungseinrichtung in Schwerkraftrichtung, also entlang der Längserstreckung des Ständers, erreichen kann.

Hierbei ist bevorzugt, dass die Schienenanordnung ein Schwalbenschwanzprofil aufweist und die Verbindungseinrichtung ein dazu passendes Gegenprofil aufweist. Ein Schwalbenschwanzprofil ermöglicht einerseits eine Bewegung der Verbindungseinrichtung entlang des Ständers. Eine Bewegung der Verbindungseinrichtung quer dazu, also aus der Schienenanordnung heraus, wird hingegen verhindert. Unter einem Schwalbenschwanzprofil soll das Profil verwendet werden, bei dem das Gegenprofil im Inneren des Ständers eine größere Breite quer zu einer Verschieberichtung aufweist als weiter außen.

Vorzugsweise weist die Schienenanordnung zwei Profile auf, mit denen die Verbindungseinrichtung in Verbindung steht. Dies ist insbesondere dann zweckmäßig, wenn die Verbindungseinrichtung zwei Verbindungselemente aufweist. In diesem Fall kann jedes Verbindungselement in einem Profil der Schienenanordnung angeordnet werden. Die beiden Verbindungselemente können dann getrennt voneinander montiert werden, was die Montage erleichtert. Sie können auch jeweils einzeln ausgerichtet werden, und zwar dergestalt, dass sie in gewünschter Weise zusammenwirken können.

Vorzugsweise weist die Verbindungseinrichtung mindestens einen Gewindebolzen auf, der die Verbindungseinrichtung gegenüber der Schienenanordnung verspannt. Damit wird auch eine Klemmkraft zwischen der Verbindungseinrichtung und dem Ständer erzeugt. Nachdem die Verbindungseinrichtung gegenüber der Schienenanordnung verspannt ist, ist eine Bewegung der Verbindungseinrichtung gegenüber dem Ständer ausgeschlossen.

Vorzugsweise weist die Verbindungseinrichtung mindestens einen ersten Gewindebolzen, der die Verbindungseinrichtung gegenüber der Rahmenanordnung verspannt, und mindestens einen zweiten Gewindebolzen, der die Verbindungseinrichtung gegenüber der Schienenanordnung verspannt, auf. Man kann also das Verspannen der Verbindungseinrichtung gegenüber der Schienenanordnung, also gegenüber dem Ständer, und gegenüber der Rahmenanordnung voneinander entkoppeln. Dies erleichtert wiederum die Montage.

Hierbei ist bevorzugt, dass die Klemmbereiche durch unterschiedlich tiefe Ausnehmungen in der Verbindungseinrichtung gebildet sind. Jede Ausnehmung kann dann einen Bereich der Rahmenanordnung, also entweder einen Bereich der ersten Rahmenelemente oder einen Bereich der zweiten Rahmenelemente, U-förmig umfassen.

Hierbei ist bevorzugt, dass die Klemmbereiche entlang der Verbindungseinrichtung versetzt angeordnet sind. Dies bedeutet lediglich, dass die Verbindung zwischen der Verbindungseinrichtung und dem Ständer in Abhängigkeit von dem gewünschten Klemmbereich an unterschiedlichen Höhenpositionen, also Positionen in Schwerkraftrichtung oder entlang der Erstreckung des Ständers, erfolgen.

Vorzugsweise ist die Verbindungseinrichtung mit Zink- oder Aluminium-Druckguss als Hauptkomponente ausgebildet. Beim Druckgießen von Zink- oder Aluminium-Elementen lassen sich sämtliche Konturen der Verbindungselemente erzeugen. Auch die Elemente der Rahmenanordnung können als Gussteile ausgebildet sein.

Die Erfindung wird im Folgenden anhand eines bevorzugten Ausführungsbeispiels in Verbindung mit einer Zeichnung beschrieben. Hierin zeigen:
- Fig. 1: eine schematische Darstellung einer Stapellageranordnung,
- Fig. 2: eine vergrößerte Ansicht einer Position, an der ein Ständer mit einer Rahmenanordnung verbunden ist,
- Fig. 3: eine schematische Darstellung eines Profils einer Schienenanordnung und
- Fig. 4: eine abgewandelte Ausführungsform zu Fig. 3.

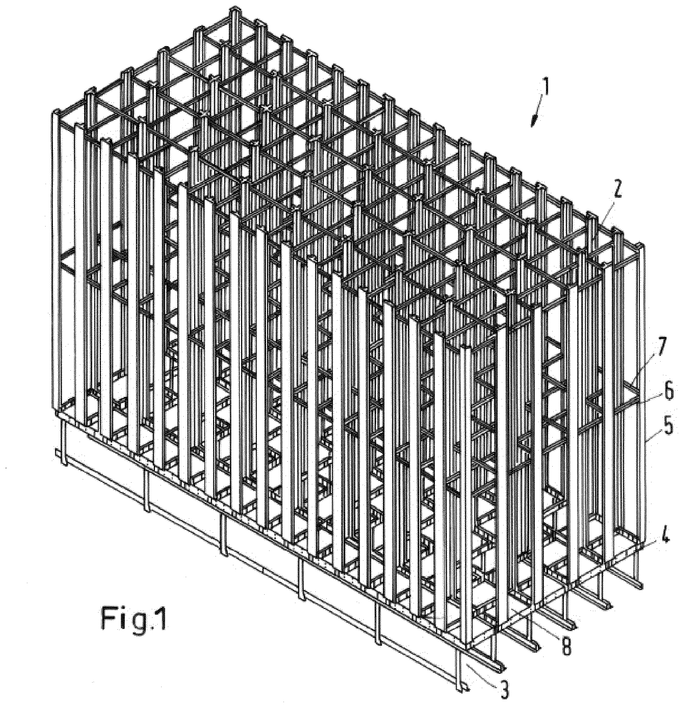

Fig. 1 zeigt sehr schematisch, also ohne weitere Einzelheiten, eine Stapellageranordnung 1 mit mehreren Behälteraufnahmeräumen 2 und einem Beschickungsraum 3, der unterhalb der Behälteraufnahmeräume 2 angeordnet ist. Zwischen den Behälteraufnahmeräumen 2 und dem Beschickungsraum 3 ist eine Rahmenanordnung 4 angeordnet. Auf der Rahmenanordnung 4 sind Ständer 5 angeordnet, die mit einem Abstand zur Rahmenanordnung 4 durch Querstreben 6 und Längsstreben 7 miteinander verbunden sind.

Die Rahmenanordnung 4 weist für jeden Behälteraufnahmeraum 2 eine Öffnung 8 auf, durch die der Behälteraufnahmeraum 2 mit dem Beschickungsraum 3 in Verbindung steht.

Im vorliegenden Fall sind Ständer 5 an jeder Ecke der Behälteraufnahmeräume 2 angeordnet. Dies ist aber nicht unbedingt erforderlich.

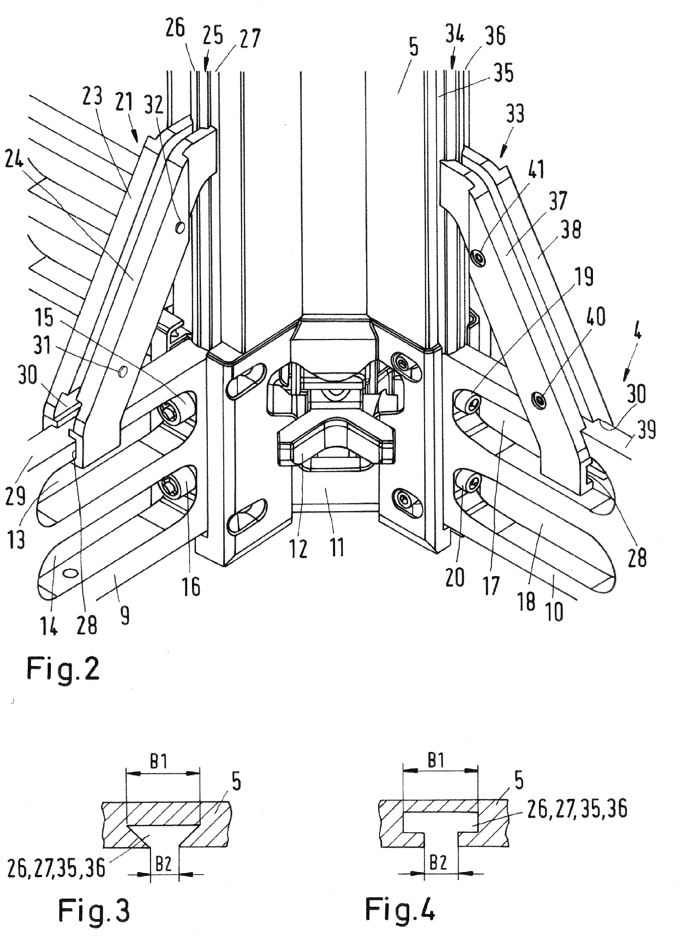

Die Behälteraufnahmeräume 2 dienen dazu, jeweils einen Behälterstapel aufzunehmen, wobei ein Behälterstapel mindestens einen Behälter aufweist. Eine stabile Lagerung der Behälterstapel wird einerseits durch eine horizontale Ausrichtung der Rahmenanordnung 4 und andererseits durch eine vertikale Ausrichtung der Ständer 5 erzielt. Die Ständer 5 müssen dabei stabil und exakt ausgerichtet mit der Rahmenanordnung 4 verbunden werden. Fig. 2 zeigt die hierfür verwendeten Elemente.

Die Rahmenanordnung 4 weist im vorliegenden Fall Längsträger 9 und Querträger 10 auf. Die Längsträger 9 sind länger als die Querträger 10 und weisen eine etwas geringere Dicke als die Querträger 10 auf. Die Längsträger 9 und die Querträger 10 sind jeweils mit einem Winkelelement 11 verbunden. An dem Winkelelement 11 ist im vorliegenden Fall eine Halteklappe 12 um eine horizontale Achse verschwenkbar angeordnet. Die Halteklappe 12 dient dazu, den untersten Behälter eines Stapels von Behältern oder einen einzelnen Behälter im Behälteraufnahmeraum 2 festzuhalten, so dass der Beschickungsraum 3 unterhalb des Behälteraufnahmeraums 2 frei bleibt.

Der Längsträger 9 weist zwei als Durchgangsöffnungen 13, 14 ausgebildete Ausnehmungen auf. In jeder dieser Durchgangsöffnungen 13, 14 ist ein Fügeelement 15, 16 in Form einer Schraube angeordnet, wobei die Schrauben 15, 16 den Längsträger 9 mit dem Winkelelement 11 verbinden.

In gleicher Weise weist der Querträger 10 zwei als Durchgangsöffnungen 17, 18 ausgebildete Ausnehmungen auf. In jeder Durchgangsöffnung 17, 18 ist ein als Schraube 19, 20 ausgebildetes Fügeelement angeordnet, das den Querträger 10 mit dem Winkelelement 11 verbindet.

Eine Verbindung zwischen dem Ständer 5 und dem Querträger 9 der Rahmenanordnung 4 wird durch eine Verbindungseinrichtung 21 bewirkt, die im vorliegenden Fall zwei Verbindungselemente 23, 24 aufweist. Der Ständer 5 weist eine Schienenanordnung 25 mit zwei Profilen 26, 27 auf, wobei jedes der beiden Verbindungselemente 23, 24 in eines der Profile 26, 27 eingreift. Jedes der Profile 26, 27 ermöglicht eine Verschiebung des jeweiligen Verbindungselements 23, 24 in Längsrichtung des Ständers 5, verhindert aber, dass das jeweilige Verbindungselement 23, 24 quer zu der Längsrichtung aus dem Ständer 5 herausgezogen werden kann. Die Profile 26, 27, von denen beispielhaft zwei mögliche Ausgestaltungen in den Fig. 3 und 4 dargestellt sind, weisen im Inneren des Ständers eine Breite B1 auf, die größer ist als eine Breite B2, an der die Verbindungselemente 23, 24 aus dem Ständer 5 herausgeführt sind. Der Einfachheit halber werden die Profile 26, 27 zusammenfassend als "Schwalbenschwanzprofile" bezeichnet, auch wenn beispielsweise das in Fig. 4 dargestellte Profil eher einem "Hammerkopf" ähnelt. Es ist auch möglich, die Anordnung so auszugestalten, dass der Vorsprung am Ständer 5 und die Nut an den Verbindungselementen 23, 24 angeordnet ist.

Die beiden Verbindungselemente 23, 24 sind spiegelsymmetrisch gleich ausgebildet. Jedes Verbindungselement 23, 24 weist im Bereich des Längsträgers eine Ausnehmung 28 auf, die einen Bereich des Längsträgers 9 zwischen der Ausnehmung 13 und der Oberseite 29 des Längsträgers 9 U-förmig umgreift. Die Verbindungselemente 23, 24 weisen auch noch eine zweite Ausnehmung 30 auf, die im Zusammenhang mit dem Querträger 10 beschrieben wird.

Die beiden Verbindungselemente 23, 24 sind durch einen ersten Gewindebolzen 31 miteinander verbunden, der die beiden Verbindungselemente 23, 24 gegenüber dem Längsträger 9 verspannt, also eine Klemmkraft zwischen der Verbindungseinrichtung 21 und dem Längsträger 9 erzeugt. Weiterhin sind die beiden Verbindungselemente 23, 24 durch einen zweiten Gewindebolzen 32 miteinander verbunden, der die Verbindungselemente 23, 24 gegenüber der Schienenanordnung 25 und damit gegenüber dem Ständer 5 verspannt.

Zur Montage werden die beiden Verbindungselemente 23, 24 in die Profile 26, 27 der Schienenanordnung 25 eingesetzt, beispielsweise von einer Stirnseite des Ständers 5 her, und dann solange in Längsrichtung des Ständers 5 verschoben, bis die Ausnehmungen 28 den entsprechenden Bereich des Querträgers 9 zwischen der Ausnehmung 13 und der Oberseite 9 umgreifen können. Danach werden die beiden Gewindebolzen 31, 32 verwendet, um die beiden Verbindungselemente 23, 24 in eine Richtung aufeinander zu zu verspannen. Auf diese Weise ist die Verbindungseinrichtung 21 zwischen dem Ständer 5 und dem Längsträger 9 festgelegt und stellt sicher, dass der Ständer 5 in dem gewünschten Winkel zum Längsträger 9 ausgerichtet ist. Dieser Winkel beträgt im Idealfall exakt 90°.

Zwischen dem Ständer 5 und dem Querträger 10 ist eine weitere Verbindungseinrichtung 33 angeordnet, die genauso aufgebaut ist, wie die Verbindungseinrichtung 21. Für die Verbindungseinrichtung 33 weist der Ständer eine Schienenanordnung 34 mit zwei Profilen 35, 36 auf. Die Verbindungseinrichtung weist zwei Verbindungselemente 37, 38 auf, von denen jedes in eines der Profile 35, 36 der Schienenanordnung 34 eingreift. Die Profile 35, 36 sind genauso ausgebildet wie die Profile 26, 27 der Schienenanordnung 25.

Die Verbindungselemente 37, 38 sind spiegelsymmetrisch gleich ausgebildet und weisen im Bereich des Querträgers 10 die Ausnehmung 30 auf, die im Zusammenhang mit den Verbindungselementen 23, 24 beschrieben worden ist. Die Ausnehmung 30 ist entlang der Verbindungseinrichtung 33 gegenüber der Ausnehmung 28 versetzt angeordnet. Die Ausnehmung 30 weist eine größere Tiefe auf als die Ausnehmung 28. Dies trägt der Tatsache Rechnung, dass der Querträger 10 gegenüber dem Längsträger 9 eine vergrößerte Dicke aufweist. Dementsprechend können die Profile 35, 36 der Schienenanordnung 34 den gleichen Abstand zueinander aufweisen, wie die Profile 26, 27 der Schienenanordnung 25.

Die Verbindungselemente 37, 38 werden auf gleiche Weise montiert, wie die Verbindungselemente 23, 24. Die Verbindungselemente 37, 38 werden mit den Profilen 35, 36 am Ständer 5 in Eingriff gebracht und können dann entlang der Längserstreckung des Ständers 5 verschoben werden, und zwar solange, bis die Ausnehmung 30 einen Bereich zwischen der Ausnehmung 17 des Querträgers 10 und einer Oberseite 39 des Querträgers 9 U-förmig umfassen kann. Sobald dies erreicht ist und der Ständer 5 gegenüber dem Querträger 10 im gewünschten Winkel ausgerichtet worden ist (im Idealfall beträgt auch dieser Winkel 90°) können zwei Gewindebolzen 40, 41 verwendet werden, um die beiden Verbindungselemente 37, 38 gegenüber dem Querträger 10 einerseits und gegenüber der Schienenanordnung 34 andererseits zu verspannen. Da die Ausnehmungen 13, 14; 17, 18 als längliche Ausnehmungen ausgebildet sind, können die Ausnehmungen 30 der Verbindungseinrichtung 33 und die Ausnehmungen 28 der Verbindungseinrichtung 21 in unterschiedlichen Entfernungen vom Ständer 5 angeordnet sein, ohne die Stabilität der Verbindung zwischen dem Ständer 5 und der Rahmenanordnung 4 mit Längsträger 9 und Querträger 10 zu beeinträchtigen.

Der Ständer 5 kann als Profilelement ausgebildet sein, das beispielsweise durch Extrudieren erzeugt wird. Bei diesem Herstellungsvorgang kann man die Schienenanordnungen 25, 34 gleich miterzeugen.

Der Längsträger 9 und der Querträger 10 können als Bleche aus Eisen oder einem anderen Material mit einer Dicke im Bereich von 5 mm bis 35 mm gebildet sein, bei dem die Ausnehmungen 13, 14, 17, 18 durch Stanzen erzeugt werden können. Die Verbindungselemente 23, 24, 37, 38 können als Zink- oder Aluminiumdruckgrussteile ausgebildet sein. Lediglich die beiden Gewindebolzen 31, 32; 40, 41 erfordern ggfs. das Erzeugen von geeigneten Bohrungen oder Löchern, wobei diese Bohrungen oder Löcher bereits beim Gießen der Verbindungselemente 23, 24, 37, 38 erzeugt werden können.

Insgesamt wird eine Verbindung zwischen dem Ständer 5 und der Rahmenanordnung 4 mit wenigen Teilen und mit wenig Aufwand auf sichere Weise ermöglicht.

## Patentansprüche

1. Stapellageranordnung (1) mit mindestens einem Behälteraufnahmeraum (2), einem Beschickungsraum (3), der unterhalb des Behälteraufnahmeraums (2) angeordnet ist, einer Rahmenanordnung (4) zwischen dem Behälteraufnahmeraum (2) und dem Beschickungsraum (3) und einem Ständer (5) an mindestens einer Ecke des Behälteraufnahmeraums (2), der mit der Rahmenanordnung (4) durch mindestens eine Verbindungseinrichtung (21, 33) verbunden ist, **dadurch gekennzeichnet, dass** die Verbindungseinrichtung (21, 33) einen Winkel zwischen der Rahmenanordnung (4) und dem Ständer (5) überbrückt und klemmend an der Rahmenanordnung (4) anliegt, wobei die Rahmenanordnung (4) mindestens zwei Träger (9, 10) mit unterschiedlichen Dicken aufweist, wobei die Verbindungseinrichtung (21, 33) mindestens zwei auf die unterschiedlichen Dicken abgestimmte unterschiedliche Klemmbereiche aufweist.

2. Stapellageranordnung nach Anspruch 1, **dadurch gekennzeichnet, dass** die Rahmenanordnung (4) für jede Verbindungseinrichtung (21, 33) eine Ausnehmung (13, 14; 17, 18) aufweist, in die die Verbindungseinrichtung (21, 33) eingreift.

3. Stapellageranordnung nach Anspruch 2, **dadurch gekennzeichnet, dass** die Verbindungseinrichtung (21, 33) einen Teil der Rahmenanordnung (4) U-förmig umgreift.

4. Stapellageranordnung nach Anspruch 2 oder 3, **dadurch gekennzeichnet, dass** die Rahmenanordnung (4) Träger (9, 10) aufweist, die Ausnehmung (13, 14; 17, 18) als Durchgangsöffnung in einem Träger (9, 10) ausgebildet ist, der mit einem Winkelelement (11) verbunden ist, und ein den Träger (9, 10) mit dem Winkelelement (11) verbindendes Fügeelement (15, 16; 19, 20) durch die Durchgangsöffnung zugänglich ist.

5. Stapellageranordnung nach einem der Ansprüche 1 bis 4, **dadurch gekennzeichnet, dass** die Verbindungseinrichtung (21, 33) zwei Verbindungselemente (23, 24; 37, 38) aufweist, die von entgegengesetzten Seiten an einem Bereich der Rahmenanordnung (4) anliegen.

6. Stapellageranordnung nach Anspruch 5, **dadurch gekennzeichnet, dass** die Verbindungselemente (23, 24; 37, 38) durch mindestens einen Gewindebolzen (31, 40) gegen die Rahmenanordnung (4) verspannt sind.

7. Stapellageranordnung nach einem der Ansprüche 1 bis 6, **dadurch gekennzeichnet, dass** der Ständer (5) eine Schienenanordnung (25, 34) aufweist, in die die Verbindungseinrichtung (21, 33) eingreift.

8. Stapellageranordnung nach Anspruch 7, **dadurch gekennzeichnet, dass** die Schienenanordnung (25, 34) ein Schwalbenschwanzprofil (26, 27; 35, 36) aufweist und die Verbindungseinrichtung (21, 33) ein dazu passendes Gegenprofil aufweist.

9. Stapellageranordnung nach Anspruch 7 oder 8, **dadurch gekennzeichnet, dass** die Schienenanordnung (25, 34) zwei Profile (26, 27; 35, 36) aufweist, mit denen die Verbindungseinrichtung (21, 33) in Verbindung steht.

10. Stapellageranordnung nach einem der Ansprüche 7 bis 9, **dadurch gekennzeichnet, dass** die Verbindungseinrichtung (21, 33) mindestens einen Gewindebolzen (32, 41) aufweist, der die Verbindungseinrichtung (21, 33) gegenüber der Schienenanordnung (25, 34) verspannt.

11. Stapellageranordnung nach Anspruch 10, **dadurch gekennzeichnet, dass** die Verbindungseinrichtung mindestens einen ersten Gewindebolzen (31, 40), der die Verbindungseinrichtung (21, 33) gegenüber der Rahmenanordnung (4) verspannt, und mindestens einen zweiten Gewindebolzen (32, 41), der die Verbindungseinrichtung (21, 33) gegenüber der Schienenanordnung (25, 34) verspannt, aufweist.

12. Stapellageranordnung nach einem der Ansprüche 1 bis 11, **dadurch gekennzeichnet, dass** die Klemmbereiche durch unterschiedlich tiefe Ausnehmungen (28, 30) in der Verbindungseinrichtung (21, 33) gebildet sind.

13. Stapellageranordnung nach einem der Ansprüche 1 bis 12, **dadurch gekennzeichnet, dass** die Klemmbereiche entlang der Verbindungseinrichtung (21, 33) versetzt angeordnet sind.

14. Stapellageranordnung nach einem der Ansprüche 1 bis 13, **dadurch gekennzeichnet, dass** die Verbindungseinrichtung (21, 33) mit Zink- oder Aluminium-Druckguss als Hauptkomponente ausgebildet ist.

## Claims

1. Stacking storage arrangement (1) comprising at least one container receiving space (2), a loading space (3) arranged below the container receiving space (2), a frame assembly (4) between the container receiving space (2) and the loading space (3), and a stand (5) at at least one corner of the container receiving space (2) which is connected to the frame assembly (4) by at least one connecting device (21, 33), **characterized in that** the connecting device (21, 33) bridges an angle between the frame assembly (4) and the stand (5) and abuts the frame assembly (4) in a clamping manner, wherein the frame assembly (4) comprises at least two beams (9, 10) having different thicknesses, wherein the connecting device (21, 33) comprises at least two different clamping areas adapted to the different thicknesses.

2. Stacking storage arrangement according to claim 1, **characterized in that** the frame assembly (4) has a recess (13, 14; 17, 18) for each connecting device (21, 33), in which the connecting device (21, 33) engages.

3. Stacking storage arrangement according to claim 2, **characterized in that** the connecting device (21, 33) engages in a U-shaped manner around part of the frame assembly (4).

4. Stacking storage arrangement according to claim 2 or 3, **characterized in that** the frame assembly (4) has supports (9, 10), the recess (13, 14; 17, 18) is formed as a through-opening in a support (9, 10) which is connected to an angle element (11), and a joining element (15, 16; 19, 20) connecting the support (9, 10) to the angle element (11) is accessible through the through-opening.

5. Stacking storage arrangement according to one of claims 1 to 4, **characterized in that** the connecting device (21, 33) has two connecting elements (23, 24; 37, 38) which rest against a region of the frame assembly (4) from opposite sides.

6. Stacking storage arrangement according to claim 5, **characterized in that** the connecting elements (23, 24; 37, 38) are clamped against the frame assembly (4) by at least one threaded bolt (31, 40).

7. Stacking storage arrangement according to one of claims 1 to 6, **characterized in that** the stand (5) has a rail system (25, 34) in which the connecting device (21, 33) engages.

8. Stacking storage arrangement according to claim 7, **characterized in that** the rail assembly (25, 34) has a dovetail profile (26, 27; 35, 36) and the connecting device (21, 33) has a mating profile that fits it.

9. Stacking storage arrangement according to claim 7 or 8, **characterized in that** the rail assembly (25, 34) has two profiles (26, 27; 35, 36) to which the connecting device (21, 33) is connected.

10. Stacking storage arrangement according to any one of claims 7 to 9, **characterized in that** the connecting device (21, 33) comprises at least one threaded bolt (32, 41) which braces the connecting device (21, 33) relative to the rail assembly (25, 34).

11. Stacking storage arrangement according to claim 10, **characterized in that** the connecting device comprises at least one first threaded bolt (31, 40) that braces the connecting device (21, 33) with respect to the frame assembly (4), and at least one second threaded bolt (32, 41) which clamps the connecting device (21, 33) with respect to the rail assembly (25, 34).

12. Stacking storage arrangement according to one of claims 1 to 11, **characterized in that** the clamping regions are formed by recesses (28, 30) of different depths in the connecting device (21, 33).

13. Stacking storage arrangement according to one of claims 1 to 12, **characterized in that** the clamping areas are arranged in an offset manner along the connecting device (21, 33).

14. Stacking storage arrangement according to one of claims 1 to 13, **characterized in that** the connecting device (21, 33) is formed with zinc or aluminum die casting as the main component.

## Revendications

1. Système d'entreposage par empilement (1) avec au moins un espace de logement de conteneurs (2), un espace de chargement (3), qui est disposé en dessous de l'espace de logement de conteneurs (2), un agencement de cadre (4) entre l'espace de logement de conteneurs (2) et l'espace de chargement (3) et un montant (5) sur au moins un coin de l'espace de logement de conteneurs (2), qui est relié à l'agencement de cadre (4) par au moins un dispositif de liaison (21, 33), ***caractérisé* en *ce que*** le dispositif de liaison (21, 33) fait la jonction d'un angle entre l'agencement de cadre (4) et le montant (5) et s'applique en serrant à l'agencement de cadre (4), sachant que l'agencement de cadre (4) comporte au moins deux supports (9, 10) avec des épaisseurs différentes, sachant que le dispositif de liaison (21, 33) comporte au moins deux zones de serrage différentes ajustées aux épaisseurs différentes.

2. Système d'entreposage par empilement selon la revendication 1, ***caractérisé* en ce que** l'agencement de cadre (4) comporte un évidement (13, 14 ; 17, 18) pour chaque dispositif de liaison (21, 33), dans lequel vient en prise le dispositif de liaison (21, 33).

3. Système d'entreposage par empilement selon la revendication 2, ***caractérisé* en ce que** le dispositif de liaison (21, 33) enserre en forme de U une partie de l'agencement de cadre (4).

4. Système d'entreposage par empilement selon la revendication 2 ou 3, ***caractérisé* en ce que** l'agencement de cadre (4) comporte des supports (9, 10), l'évidement (13, 14 ; 17, 18) est constitué sous la forme d'une ouverture de passage dans un support (9, 10), qui est relié à un élément d'angle (11) et un élément d'assemblage (15, 16 ; 19, 20) reliant le support (9, 10) à l'élément d'angle (11) est accessible par l'ouverture de passage.

5. Système d'entreposage par empilement selon l'une quelconque des revendications 1 à 4, ***caractérisé* en ce *que*** le dispositif de liaison (21, 33) comporte deux éléments de liaison (23, 24 ; 37, 38), qui s'appliquent depuis les côtés opposés à une zone de l'agencement de cadre (4).

6. Système d'entreposage par empilement selon la revendication 5, ***caractérisé en ce que*** les éléments de liaison (23, 24 ; 37, 38) sont serrés contre l'agencement de cadre (4) par au moins un boulon fileté (31, 40).

7. Système d'entreposage par empilement selon l'une quelconque des revendications 1 à 6, ***caractérisé en ce que*** le montant (5) comporte un système de rail (25, 34), dans lequel vient en prise le dispositif de liaison (21, 33).

8. Système d'entreposage par empilement selon la revendication 7, **caractérisé en ce que** le système de rail (25, 34) comporte un profilé en queue d'aronde (26, 27 ; 35, 36) et le dispositif de liaison (21, 33) comporte un profilé complémentaire s'y adaptant.

9. Système d'entreposage par empilement selon la revendication 7 ou 8, ***caractérisé en ce que*** le système de rail (25, 34) comporte deux profilés (26, 27 ; 35, 36) avec lesquels le dispositif de liaison (21, 33) est en liaison.

10. Système d'entreposage par empilement selon l'une quelconque des revendications 7 à 9, ***caractérisé en ce que*** le dispositif de liaison (21, 33) comporte au moins un boulon fileté (32, 41), qui serre le dispositif de liaison (21, 33) contre le système de rail (25, 34).

11. Système d'entreposage par empilement selon la revendication 10, ***caractérisé en ce que*** le dispositif de liaison au moins un premier boulon fileté (31, 40), qui serre le dispositif de liaison (21, 33) par rapport à l'agencement de cadre (4) et au moins un deuxième boulon fileté (32, 41), qui serre le dispositif de liaison (21, 33) contre le système de rail (25, 34).

12. Système d'entreposage par empilement selon l'une quelconque des revendications 1 à 11, ***caractérisé en ce que*** les zones de serrage sont formées par des évidements de profondeurs différentes (28, 30) dans le dispositif de liaison (21, 33).

13. Système d'entreposage par empilement selon l'une quelconque des revendications 1 à 12, ***caractérisé en ce que*** les zones de serrage sont disposées décalées le long du dispositif de liaison (21, 33).

14. Système d'entreposage par empilement selon l'une quelconque des revendications 1 à 13, ***caractérisé en ce que*** le dispositif de liaison (21, 33) est constitué d'une pièce moulée sous pression à base de zinc ou d'aluminium.
